(19) **Europäisches Patentamt / European Patent Office / Office européen des brevets**

(11) **EP 2 988 093 B1**

(12) **EUROPEAN PATENT SPECIFICATION**

(45) Date of publication and mention
of the grant of the patent:
**17.07.2019 Bulletin 2019/29**

(51) Int Cl.:
**G01B 11/24** *(2006.01)* **H04N 13/00** *(2018.01)*
**G06T 7/593** *(2017.01)*

(21) Application number: **14785906.0**

(22) Date of filing: **15.04.2014**

(86) International application number:
**PCT/JP2014/060679**

(87) International publication number:
**WO 2014/171438 (23.10.2014 Gazette 2014/43)**

(54) **THREE-DIMENSIONAL SHAPE MEASUREMENT DEVICE, THREE-DIMENSIONAL SHAPE MEASUREMENT METHOD, AND THREE-DIMENSIONAL SHAPE MEASUREMENT PROGRAM**

VORRICHTUNG ZUR MESSUNG DREIDIMENSIONALER FORMEN, VERFAHREN ZUR MESSUNG DREIDIMENSIONALER FORMEN UND PROGRAMM ZUR MESSUNG DREIDIMENSIONALER FORMEN

DISPOSITIF DE MESURE DE FORME TRIDIMENSIONNELLE, PROCEDE DE MESURE DE FORME TRIDIMENSIONNELLE ET PROGRAMME DE MESURE DE FORME TRIDIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2013 JP 2013088556**

(43) Date of publication of application:
**24.02.2016 Bulletin 2016/08**

(73) Proprietor: **Toppan Printing Co., Ltd.**
**Tokyo 110-0016 (JP)**

(72) Inventors:
• **UNTEN, Hiroki**
**Tokyo 110-0016 (JP)**
• **ISHII, Tatsuya**
**Tokyo 110-0016 (JP)**

(74) Representative: **Cabinet Plasseraud**
**66, rue de la Chaussée d'Antin**
**75440 Paris Cedex 09 (FR)**

(56) References cited:
**JP-A- H1 023 465     JP-A- 2009 087 209**
**JP-A- 2009 168 536     JP-A- 2012 015 674**
**US-A1- 2013 038 701     US-B1- 8 259 161**

**Description**

Technical Field

The present invention relates to a three-dimensional shape measurement device, a three-dimensional shape measurement method, and a three-dimensional shape measurement program.

This application claims priority from Japanese Patent Application No. 2013-088556 filed in Japan on April 19, 2013.

Background Art

Non-Patent Literature 1 describes an example of a technique of generating a three-dimensional model of an object on the basis of a plurality of two-dimensional images containing the object imaged while an imaging unit is moved. In the three-dimensional shape measurement system described in Non-Patent Literature 1, a three-dimensional model of an object is generated as follows. Firstly, the entire object is imaged as a dynamic image while a stereo camera configuring an imaging unit is moved. Such a stereo camera, which is also called a binocular stereoscopic camera, refers to herein as a device to image an object from a plurality of different perspectives. Then, three-dimensional coordinate values corresponding to each pixel are calculated based on one set of two-dimensional images, for each of predetermined frames. It should be noted that the three-dimensional coordinate values calculated then are represented as a plurality of three-dimensional coordinates different for each perspective of the stereo camera. Thus, in the three-dimensional shape measurement system described in Non-Patent Literature 1, movement of the perspective of the stereo camera is estimated by tracking a feature point group contained in a plurality of two-dimensional images captured as dynamic images across a plurality of frames. Then, the three-dimensional model represented by a plurality of coordinate systems is integrated into a single coordinate system on the basis of the result of estimating the movement of the perspective to thereby generate a three-dimensional model of the object.

A three-dimensional model of an object in the present invention refers a model represented by digitizing in a computer the shape of the object in a three-dimensional space. For example, the three-dimensional model refers to a point group model that reconstructs a surface profile of the object with a set of a plurality of points (i.e., a point group) in the three-dimensional space on the basis of a multi-perspective two-dimensional image. Three-dimensional shape measurement in the present invention refers to generating a three-dimensional model of an object by acquiring a plurality of two-dimensional images, and also refers to acquiring a plurality of two-dimensional images for generation of the three-dimensional model of an object.

The prior art documents US2013038701 A1 and US8259161 B1 disclose three-dimensional shape measurements by sequentially acquiring stereo-images. Intermediate images are used to trigger the acquisition of further stereo-images.

Citation List

Non-Patent Literature

Non-Patent Literature 1: "Review of VR Model Automatic Generation Technique by Moving Stereo Camera Shot" by Hiroki UNTEN, Tomohito MASUDA, Toru MIHASHI, Makoto ANDO; Journal of the Virtual Reality Society of Japan, Vol. 12, No. 2, 2007

Summary of the Invention

Technical Problem

As described above, in the three-dimensional shape measurement systems described in Non-Patent Literature 1, a plurality of two-dimensional images are captured while an imaging unit is moved, and a three-dimensional model of an object is generated based on the plurality of captured two-dimensional images. In such a configuration, since a two-dimensional image that is subjected to a process of generating a three-dimensional model is periodically captured, there may be areas that are not imaged when, for example, the moving speed of the imaging unit is high. In contrast, when the moving speed of the imaging unit is low, overlapped areas may be increased between a plurality of images. In addition, there may be a situation where there is an area whose image is desired to be captured more densely and an area desired to be captured otherwise, depending on the complexity of the shape of an object. For example, when a user is not skilled, it may sometimes be difficult to pick up an image in an appropriate direction and with appropriate frequency. That is, in the case of capturing a plurality of two-dimensional images that are subjected to a process of generating a three-dimensional model, periodical capturing of images may disable appropriate acquisition of two dimensional images when, for example, the moving speed is high or low, or the shape of the object is complex. When unnecessary overlapped imaging is increased, the two-dimensional images are excessively increased. This may lead to a possibility that an amount of memory, i.e. image data to be stored, is unavoidably increased or extra processing is required to be performed. In this way, there has been a problem that, when a two-dimensional image subjected to a process of generating a three-dimensional model is periodically captured, it is sometimes difficult to appropriately capture a plurality of images.

The present invention has been made considering the above situations, and has as its object to provide a three-dimensional shape measurement device, a three-dimensional shape measurement method, and a three-dimensional shape measurement program that are capable of appropriately capturing a two-dimensional image that is subjected to a process of generating a three-dimensional model. Solution to Problem

In order to solve the above problems, a three-dimensional shape measurement device according to a first aspect of the present invention is provided as defined by claim 2.

In the three-dimensional shape measurement device according to the first aspect of the present invention, it is preferred that the similarity corresponds to a degree of correlation between a plurality of feature points extracted from the first two-dimensional image and a plurality of feature points extracted from the second two-dimensional image.

In the three-dimensional shape measurement device according to the first aspect of the present invention, it is preferred that the first two-dimensional image and the second two-dimensional image have different settings in at least one of a shutter speed, an aperture, and sensitivity of an image sensor in capturing an image.

It is preferred that, in the three-dimensional shape measurement device according to the first aspect of the present invention, the device includes an illumination unit illuminating an imaging object; and the imaging unit captures the second two-dimensional image, while the illumination unit performs predetermined illumination relative to the imaging object, according to the output instruction.

A three-dimensional shape measurement method according to a second aspect of the present invention is provided as defined by claim 1.

A three-dimensional shape measurement program according to a third aspect of the present invention is provided as defined by claim 6.

Advantageous Effects of the Invention

According to the aspects of the present invention, based on a first two-dimensional image, which is sequentially outputted, and a second two-dimensional image with a setting different from that of the first two-dimensional image, an output instruction for the second two-dimensional image is generated for the imaging unit. That is, in this configuration, the sequentially outputted first two-dimensional image and the second two-dimensional image can be used as information in determining whether to generate the output instruction for the second two-dimensional image. According to this configuration, for example, an output instruction can be generated at appropriate timing on the basis of the plurality of first two-dimensional images. At the same time, the output instruction can be generated taking account such as of the necessity of a subsequent second two-dimensional image on the basis of the already outputted second two-dimensional image and the like. That is, compared with the case of periodically capturing an image, an appropriate setting can be easily made in respect of the timing of capturing an image and an amount of images to be captured.

Brief Description of the Drawings

Fig. 1 is a block diagram illustrating a configuration example in one embodiment of the present invention;
Fig. 2 is a block diagram illustrating a configuration example of an imaging unit 11 illustrated in Fig. 1;
Fig. 3 is a block diagram illustrating a configuration example of an output instruction generation unit 12 illustrated in Fig. 1;
Fig. 4 is a flow chart illustrating an operation example of the output instruction generation unit 12 illustrated in Fig. 3;
Fig. 6 is a diagram illustrating an example of measuring an object using the imaging unit 11 illustrated in Fig. 2;
Fig. 7 is a diagram illustrating an operation example of the output instruction generation unit 12 illustrated in Fig. 3;

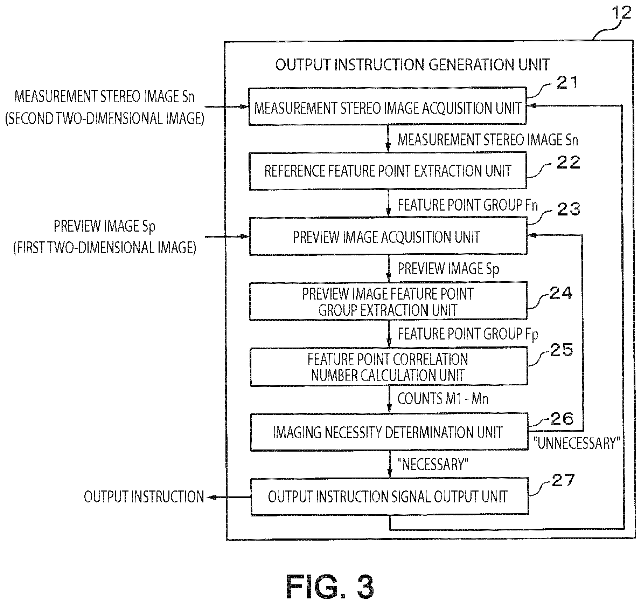

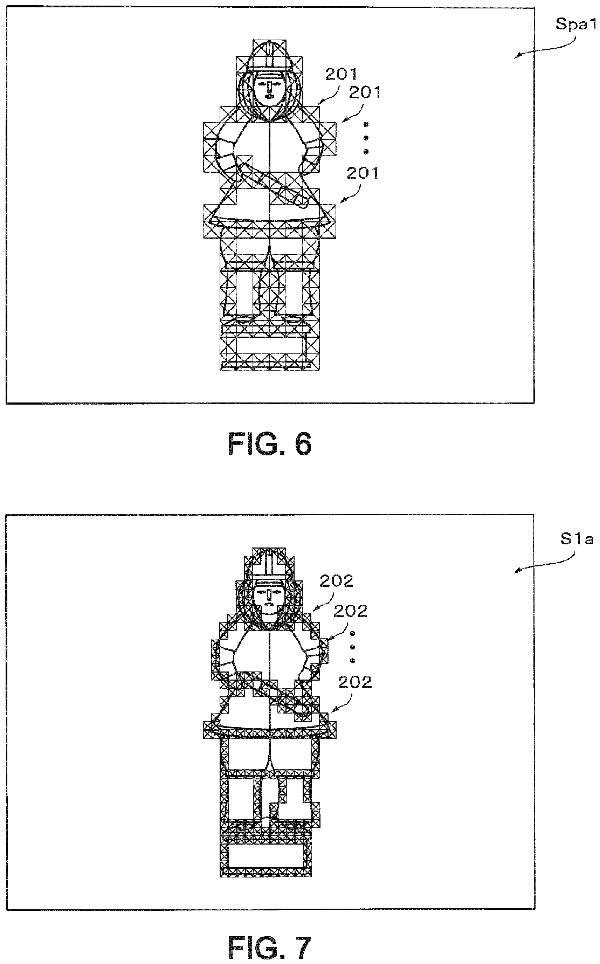

Fig. 7 is a diagram illustrating an operation example of the output instruction generation unit 12 illustrated in Fig. 3; and
Fig. 7 is a diagram illustrating an operation example of the output instruction generation unit 12 illustrated in Fig. 3.

Description of Embodiments

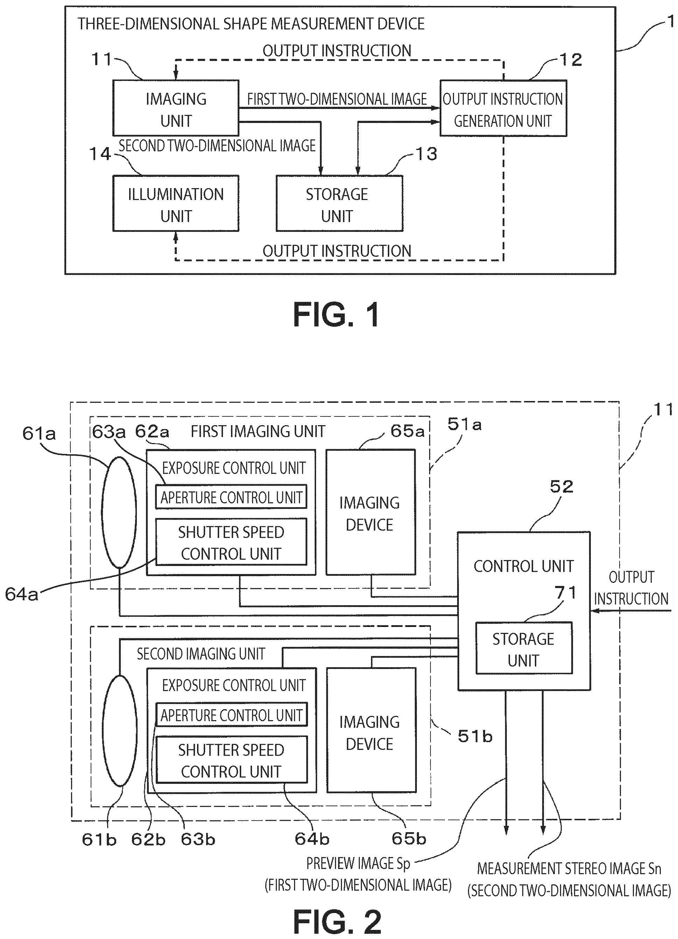

With reference to the drawings, hereinafter is described an embodiment of the present invention. Fig. 1 is a block diagram illustrating a configuration example of a three-dimensional shape measurement device 1 as one embodiment of the present invention. The three-dimensional shape measurement device 1 is provided with an imaging unit 11, an output instruction generation unit 12, a storage unit 13, and an illumination unit 14. The imaging unit 11 sequentially outputs a predetermined captured two-dimensional image (hereinafter, referred to as a first two-dimensional image) and also outputs a two-dimensional image with a setting different from that of the captured first two-dimensional image (hereinafter, referred to as a second two-dimensional image), according to a predetermined output instruction.

In the embodiment of the present invention, setting of a captured two-dimensional image refers to setting information indicating a structure and a format of the image data, or setting information indicating instructions for imaging, such as imaging conditions. The setting information indicating a structure and a format of the image data corresponds to information indicating image data specifications, such as resolution of the image (hereinafter also referred to as image resolution), a method of image compression, and a compression ratio, and the like. On the other hand, the setting information indicating instructions for capturing an image corresponds to information indicating, for example, imaging specifications (i.e., instructions for capturing an image), such as imaging resolution, a shutter speed, an aperture, and sensitivity of an image sensor (ISO sensitivity) in capturing an image. In the embodiment of the present invention, imaging resolution refers to the reading resolution of a plurality of pixel signals from the image sensor. An image sensor may have a plurality of combinations of a frame rate and the number of effective output lines, although it depends on the image sensor. In such an image sensor, for example, setting can be made such that the first two-dimensional image is formed from a pixel signal having a small number of effective lines and the second two-dimensional image is formed from a pixel signal having a large number of effective lines. The image resolution mentioned above is the resolution of image data outputted from the imaging unit 11 and thus may coincide with or may be different from the imaging resolution (e.g. may be decreased by a culling process or increased by interpolation in an appropriate process). The first two-dimensional image refers to, for example, an image repeatedly and sequentially captured at a predetermined frame rate (i.e., dynamic image). The second two-dimensional image refers to an image with a resolution different from the resolution of the first two-dimensional image (dynamic image or still image), or an image captured under imaging conditions different from those of the first two-dimensional image.

The imaging conditions may include presence/absence of illumination and difference in illumination intensity of the illumination unit 14. These conditions may also be set in combination of two or more. For example, when the second two-dimensional image is captured, the influence of camera shaking and motion blur can be reduced by casting illumination from or intensifying illumination of the illumination unit 14 while increasing the shutter speed. Alternatively, when the second two-dimensional image is captured, the depth of field can be increased by casting illumination from or intensifying illumination of the illumination unit 14, while increasing the aperture value (F value) (i.e., by narrowing the aperture). In addition, to cope with the image resolution and the imaging resolution, the resolution of the second two-dimensional image can be made higher than the resolution of the first two-dimensional image. In this case, the accuracy of generating a three-dimensional model can be more enhanced by using the second two-dimensional image as an object to be processed in generating the three-dimensional model and making its resolution higher. At the same time, since the first two-dimensional image is sequentially captured, the frame rate can be easily raised or the amount of data can be decreased by permitting the first two-dimensional image to have a low resolution. For the settings of these imaging conditions, predetermined values for the respective first and second two-dimensional images may be used. Alternatively, information instructing the settings may be appropriately inputted to the imaging unit 11 from the output instruction generation unit 12 or the like.

The imaging unit 11 may also be configured as follows. Specifically, the imaging unit 11 acquires image data having the same resolution as that of the second two-dimensional image when outputting the first two-dimensional image, and temporarily stores the image data in its internal storage unit. Then, the imaging unit 11 extracts predetermined pixels only, and outputs the pixels to the output instruction generation unit 12 and the storage unit 13, as the first two-dimensional image having a resolution lower than that of the second two-dimensional image. Then, when an output instruction is supplied from the output instruction generation unit 12, the imaging unit 11 reads the image data rendered to be the first two-dimensional image corresponding to the output instruction, from its internal storage unit and outputs the readout data, as it is, as a second two-dimensional image with the resolution at the time of capture. Then, the imaging unit 11 deletes the image data rendered to be the second two-dimensional image and the image data captured at an earlier clock time than this image data, from its internal storage unit, according to the output instruction. The storage unit inside the imaging unit 11 has a capacity that is a minimally required necessary capacity for only the storage of the captured image data, as determined by experiment or the like. The captured image data to be stored in this case is captured before the subsequent capture of a second two-dimensional image, following the currently stored one.

In this case, the imaging unit 11 may acquire the image data mentioned above in the form of a dynamic image, or may acquire image data at a predetermined cycle. In this case, the difference in setting between the first and second two-dimensional images is only the image resolution. Accordingly, depending on the surrounding environment for capturing imaging data, for example, imaging conditions, such as a shutter speed, an aperture, and sensitivity of an image sensor in capturing the imaging data, can be set in advance in conformity with the environment. Thus, a user who acquires an image can make settings of the three-dimensional shape measurement device 1 in conformity with the surrounding environment of the moment to be imaged.

The imaging unit 11 that can be used may be one whose focal length can be changed telescopically or in a wide angle, or may be a fixed one. For example, the focal length is changed in accordance with an instruction from the output instruction generation unit 12 and the like. The imaging unit 11 may be provided with an automatic focusing function (i.e., a function of automatically focusing on an object), or may be provided with a manual focusing function. However, in the case of changing a focal length not by an instruction from the output instruction generation unit 12 and the like, the imaging unit 11 is ensured to be able to supply data indicating the focal length to the output instruction generation unit 12 and the like, together with the first and second two-dimensional images, or image data representing the captured images.

The output instruction generation unit 12 generates the output instruction on the basis of the first and second two-dimensional images outputted by the imaging unit 11.

The storage unit 13 is a storage device that stores the second two-dimensional image outputted by the imaging unit 11, in accordance with the output instruction. The storage unit 13 may directly store the second two-dimensional image outputted by the imaging unit 11 in accordance with the output instruction, or may receive and store, via the output instruction generation unit 12, the second two-dimensional image that has been acquired by the output instruction generation unit 12 from the imaging unit 11. The storage unit 13 may store the second two-dimensional image, while storing various types of data (e.g. data indicating a plurality of feature points extracted from the image, data indicating a result of tracking a plurality of feature points extracted from the image, between different frames, three-dimensional shape data reconstructed from the image, and the like) calculated in the course of the process where the output instruction generation unit 12 generates the output instruction. The storage unit 13 may be ensured to store the first two-dimensional image, while storing the second two-dimensional image.

The illumination unit 14 is a device illuminating an imaging object of the imaging unit 11. The illumination unit 14 carries out predetermined illumination relative to the imaging object, according to the output instruction outputted by the output instruction generation unit 12, so as to coincide with the timing for the imaging unit 11 to capture the second two-dimensional image. The illumination unit 14 may be a light emitting device that radiates strong light, called flash, strobe, or the like, in a short period of time to the imaging object, or may be a device that continuously emits predetermined light. The predetermined illumination relative to the imaging object performed by the illumination unit 14, according to the output instruction refers to illumination in which the presence or absence of light emission, or large or small amount of light emission depends on the presence or absence of an output instruction. That is to say, the illumination unit 14 emits strong light in a short period of time to the imaging object, or enhances the intensity of illumination, according to the output instruction.

As illustrated in Fig. 1, the three-dimensional shape measurement device 1 may be integrally provided with the imaging unit 11, the output instruction generation unit 12, the storage unit 13, and the illumination unit 14. Alternatively, for example, one, or two or more elements (components of the three-dimensional shape measurement device) may be configured by separate devices. For example, the imaging unit 11, the output instruction generation unit 12, the storage unit 13, and the illumination unit 14 may be integrally configured as an electronic device, such as a mobile camera or a mobile information terminal. Alternatively, for example, the imaging unit 11 and a part or the entire storage unit 13 may be configured as a mobile camera, and the output instruction generation unit 12 and a part of the storage unit 13 may be configured as a personal computer or the like. Alternatively, the illumination unit 14 may be omitted, or the illumination unit 14 may be configured as a device separate from the imaging unit 11, e.g., as a stationary illumination device. Alternatively, the illumination unit 14 may be configured by a plurality of light emitting devices.

Further, the three-dimensional shape measurement device 1 may be provided with a wireless or wired communication device, and establish connection between the components illustrated in Fig. 1 via wireless or wired communication lines. Alternatively, the three-dimensional shape measurement device 1 may be provided with a display unit, a tone signal output unit, a display lamp, and an operation unit, not shown in Fig. 1, and have a configuration of outputting an output instruction from the output instruction generation unit 12 to the display unit, the tone output unit, and the display lamp. Thus, when a user operates a predetermined operation device, the second two-dimensional image may be ensured to be captured by the imaging unit 11. That is, in the case where the output instruction generation unit 12 outputs an output instruction, it may be so configured that the imaging unit 11 directly captures the second two-dimensional image in accordance with the output instruction, or that the imaging unit 11 captures the second two-dimensional image in accordance with the output instruction via an operation by the user.

For example, the three-dimensional shape measurement device 1 may be provided with a configuration of carrying out a process of estimating the movement of the three-dimensional shape measurement device 1 on the basis of a plurality of first two-dimensional images. Such a configuration may be provided in the output instruction generation unit 12 (or separately from the output instruction generation unit 12). For example, the estimation of the movement may be carried out by tracking a plurality of feature points contained in the respective first two-dimensional images (e.g. see Non-Patent Literature 1). In this case, as a method of tracking feature points between a plurality of two-dimensional images like dynamic images, several methods, such as the Kanade-Lucas-Tomasi method (KLT method), are widely used. The result of estimating movement can be stored, for example, in the storage unit 13.

The three-dimensional shape measurement device 1 may have a function of obtaining the position information of the own device using, for example, a GPS (global positioning system) receiver or the like, or may have a function of sensing the movement of the own device using an acceleration sensor, a gyro sensor, or the like. For example, the result of sensing the movement can be stored in the storage unit 13.

Referring now to Fig. 2, hereinafter is described a configuration example of the imaging unit 11 that has been described with reference to Fig. 1. The imaging unit 11 illustrated in Fig. 2 is provided with a first imaging unit 51a, a second imaging unit 51b, and a control unit 52. The first and second imaging units 51a and 51b are image sensors having an identical configuration. The first imaging unit 51a is provided with an optical system 61a, an exposure control unit 62a, and an image sensor 65a. The second imaging unit 51b is provided with an optical system 61b, an exposure control unit 62b, and an image sensor 65b having a configuration identical with the optical system 61a, the exposure control unit 62a, and the image sensor 65a, respectively. The first and second imaging units 51a and 51b are disposed in the imaging unit 11, at mutually different positions and in mutually different directions. The optical systems 61a and 61b are provided with one or more lenses, a lens driving mechanism for changing the focal length telescopically or in a wide angle, and a lens driving mechanism for automatic focusing. The exposure control units 62a and 62b are provided with aperture control units 63a and 63b, and shutter speed control units 64a and 64b. The aperture control units 63a and 63b are provided with a mechanical variable aperture system, and a driving unit for driving the variable aperture system, and discharge the light that is incident from the optical systems 61a and 61b by varying the amount of the light. The shutter speed control units 64a and 64b are provided with a mechanical shutter, and a driving unit for driving the mechanical shutter to block the light incident from the optical systems 61a and 61b, or allow passage of the light for a predetermined period of time. The shutter speed control units 64a and 64b may use an electronic shutter instead of the mechanical shutter.

The image sensors 65a and 65b introduce the reflected light from an object via the optical systems 61a and 61b and the exposure control units 62a and 62b, and output the light after being converted into an electrical signal. The image sensors 65a and 65b configure pixels with a plurality of light-receiving elements arrayed in a matrix lengthwise and widthwise on a plane (a pixel herein refers to a recording unit of an image). The image sensors 65a and 65b may be or may not be provided with respective color filters conforming to the pixels. The image sensors 65a and 65b have respective driving circuits for the light-receiving elements, conversion circuits for the output signals, and the like, and convert the light received by the pixels into a digital or analog predetermined electrical signal to output the converted signal to the control unit 52 as a pixel signal. The image sensors 65a and 65b that can be used include ones capable of varying the readout resolution of the pixel signal in accordance with an instruction from the control unit 52.

The control unit 52 controls the optical systems 61a and 61b, the exposure control units 62a and 62b, and the image sensors 65a and 65b provided in the first and second imaging units 51a and 51b, respectively. The control unit 52 repeatedly inputs the pixel signals outputted by the first and second imaging units 51a and 51b at a predetermined frame cycle, for output as a preview image Sp (corresponding to the first two-dimensional image in Fig. 1), with the pixel signals being combined on a frame basis. The control unit 52 changes, for example, the imaging conditions at the time of capturing the preview image Sp to predetermined imaging conditions in accordance with the output instruction inputted from the output instruction generation unit 12. At the same time, under the above predetermined imaging conditions, the control unit 52 inputs the pixel signals, which correspond to one frame or a predetermined number of frames, read out from the first and second imaging units 51a and 51b. For example, the control unit 52 combines, on a frame basis, the image signals captured under the imaging conditions changed in accordance with the output instruction, and outputs the combined signals as a measurement stereo image Sn (corresponding to the second two-dimensional image in Fig. 1) (n denotes herein an integer from 1 to N representing a pair number). The preview image Sp is a name representing two types of images, one being an image including one preview image for each frame, and the other being an image including two preview images for each frame. When specifying the preview image Sp that contains two preview images captured by a stereo camera, the preview image Sp is termed as a preview stereo image Sp.

The control unit 52 may be provided with a storage unit 71 therein. In this case, the control unit 52 may acquire image data whose resolution is the same as that of the measurement stereo image Sn (second two-dimensional image) when outputting the preview image Sp (first two-dimensional image). In this case, the control unit 52 may temporarily store the image data in the storage unit 71 therein, and extract only predetermined pixels. Further, in this case, the control unit 52 may output the extracted pixels as the preview image Sp having a resolution lower than the measurement stereo image Sn, to the output instruction generation unit 12 and the storage unit 13. In this case, when the output instruction is supplied from the output instruction generation unit 12, the control unit 52 reads the image data, as the preview image Sp, corresponding to the output instruction, from its internal storage unit 71 and outputs the data, as it is, as the measurement stereo image Sn with the resolution at the time of capture. Then, the control unit 52 deletes the image data rendered to be the measurement stereo image Sn and the image data captured at an earlier clock time than this image data, from its internal storage unit 71, according to the output instruction. The storage unit inside the imaging unit 71 may have a capacity that is a minimally required capacity necessary for only the storage of the captured image data, as determined by experiment or the like. The captured image data to be stored in this case is captured before the subsequent capture of a measurement stereo image Sn, following the currently stored one.

In the configuration illustrated in Fig. 2, the first and second imaging units 51a and 51b are used as stereo cameras. For example, an internal camera parameter matrix A of the first imaging unit 51a and an internal camera parameter matrix A of the second imaging unit 51b are identical. An external camera parameter matrix M between the first and second imaging units 51a and 51b is set to a predetermined value in advance. Accordingly, by correlating between the pixels (or between subpixels) on the basis of the images concurrently captured by the first and second imaging units 51a and 51b (hereinafter, the pair of images are also referred to as stereo image pair), a three-dimensional shape (i.e., three-dimensional coordinates) can be reconstructed based on the perspective of having captured the images, without uncertainty.

The internal camera parameter matrix A is also called a camera calibration matrix, which is a matrix for transforming physical coordinates related to the imaging object into image coordinates (i.e., coordinates centered on an imaging surface of the image sensor 65a of the first imaging unit 51a and an imaging surface of the image sensor 65b of the second imaging unit 51b, the coordinates being also called camera coordinates). The image coordinates use pixels as units. The internal camera parameter matrix A is represented by a focal length, coordinates of the image center, a scale factor (= conversion factor) of each component of the image coordinates, and a shear modulus. The external camera parameter matrix M transforms the image coordinates into world coordinates (i.e., coordinates commonly determined for all perspectives and objects). The external camera parameter matrix M is determined by three-dimensional rotation (i.e., change in posture) and translation (i.e., change in position) between a plurality of perspectives. The external camera parameter matrix M between the first and second imaging units 51a and 51b can be represented by, for example, rotation and translation relative to the image coordinates of the second imaging unit 51b, with reference to the image coordinates of the first imaging unit 51a. The reconstruction of a three-dimensional shape based on a stereo image pair without uncertainty refers to calculating physical three-dimensional coordinates corresponding to each pixel of the object, from each captured image of the two imaging units whose internal camera parameter matrix A and the external camera parameter matrix M are both known. In the embodiment of the present invention, to be uncertain refers to that a three-dimensional shape projected to an image cannot be unequivocally determined.

The imaging unit 11 illustrated in Fig. 1 does not have to be the stereo camera illustrated in Fig. 2 (i.e., configuration using two cameras). For example, the imaging unit 11 may include only one image sensor (i.e., one camera), and two images captured while the image sensor is moved may be used as a stereo image pair. However, in this case, since the external camera parameter matrix M is uncertain, some uncertainty remains. However, for example, correction can be made using measured data of three-dimensional coordinates for a plurality of reference points of the object or, if measured data is not used, the three-dimensional shape can be reconstructed in a virtual space that premises the presence of uncertainty, not in a real three-dimensional space. The number of cameras is not limited to two, but may be, for example, three or four.

Referring now to Fig. 3, hereinafter is described a configuration example of the output instruction generation unit 12 shown in Fig. 1. The output instruction generation unit 12 shown in Fig. 3 generates an output instruction on the basis of the similarity between the preview image Sp (first two-dimensional image) and the measurement stereo image Sn (second two-dimensional image). The similarity is calculated in conformity with a degree of correlation between a plurality of feature points extracted from the preview image Sp and a plurality of feature points extracted from the measurement stereo image Sn. The output instruction generation unit 12 shown in Fig. 3 may be configured, for example, by components, such as a CPU (central processing unit) and a RAM (random access memory), and a program to be executed by the CPU. Fig. 3 illustrates components of the output instruction generation unit 12. In Fig. 3, the process (or function) carried out by executing the program is divided into a plurality of blocks. The term "signal" used in the descriptions below may refer to predetermined data for use in communication (transmission, reception, etc.) performed between functions or between routines in executing the program.

In the configuration example shown in Fig. 3, the output instruction generation unit 12 is provided with a measurement stereo image acquisition unit 21, a reference feature point extraction unit 22, a preview image acquisition unit 23, a preview image feature point group extraction unit 24, a feature point correlation number calculation unit 25, an imaging necessity determination unit 26, and an output instruction signal output unit 27. The measurement stereo image acquisition unit 21 acquires the measurement stereo image Sn (second two-dimensional image) from the imaging unit 11 and outputs the acquired image to the reference feature point extraction unit 22. The reference feature point extraction unit 22 extracts a feature point group Fn (n denotes an integer from 1 to N representing a pair number) including a plurality of feature points from the measurement stereo image Sn outputted by the measurement stereo image acquisition unit 21. Feature points refer to points that can be easily correlated to each other between stereo images or dynamic images. For example, each feature point is defined to be a point (arbitrarily selected point, first point), or defined to be the color, brightness, or outline information around the point, which is strikingly different from another point (second point) in the image. In other words, each feature point is defined to be one of two points whose relative differences appear to be striking in the image, from the viewpoints of color, brightness, and outline information. Feature points are also called vertexes and the like. As an extraction algorithm to extract feature points from an image, a variety of algorithms functioning as corner detection algorithms are proposed and the algorithm to be used is not particularly limited. However, it is desired that an extraction algorithm is capable of stably extracting a feature point in a similar region even when an image is rotated, moved in parallel, and scaled. As such an algorithm, SIFT (US 6711293) or the like is known. The reference feature point extraction unit 22 may extract feature points from each of the two images contained in the measurement stereo images Sn, or may extract feature points from either one of the images. The reference feature point extraction unit 22 stores the extracted feature point group Fn in a predetermined storage device, such as the storage unit 13.

The preview image acquisition unit 23 acquires a preview image Sp (first two-dimensional image) from the imaging unit 11 for each frame (or for each predetermined frames) and outputs the acquired image to the preview image feature point group extraction unit 24. The preview image feature point group extraction unit 24 extracts a feature point group Fp (p is a suffix indicating a preview image) including a plurality of feature points from the preview image Sp outputted by the preview image acquisition unit 23. The preview image feature point group extraction unit 24 may extract feature points from each of the two images contained in the preview image Sp, or may extract feature points from either one of the images.

The feature point correlation number calculation unit 25 calculates the number of points correlated between the latest feature point group Fp extracted by the preview image feature point group extraction unit 24 and the feature point group Fn (n = the number n of the measurement stereo images Sn acquired previously (in the past)) extracted by the reference feature point extraction unit 22 previously (in the past). The feature point correlation number calculation unit 25 correlates the feature point group Fp extracted from the preview image Sp against each of feature point groups F1, F2, ..., Fn extracted from n pairs of measurement stereo images Sn and calculates and outputs counts M1, M2, ..., Mn of correlation established between the feature point group Fp and each of the feature point groups F1, F2, ..., Fn. The feature point groups F1, F2, ..., Fn are, each, a set of feature points extracted from the respective measurement stereo images S1, S2, ..., Sn. Correlation between the feature points can be determined by determining whether or not correlation properties are obtained between the feature points on the basis, for example, of a result of statistical analysis on the similarity of a pixel value and coordinate values of each feature point and the similarity in the plurality of feature points as a whole. For example, the count M1 indicates the number of feature points that have been correlated between the feature point group Fp and the feature point group F1. Similarly, for example, the count M2 indicates the number of feature points that have been correlated between the feature point group Fp and the feature point group F2.

The imaging necessity determination unit 26 inputs the counts M1 to Mn outputted by the feature point correlation number calculation unit 25 and determines whether or not it is necessary to acquire a subsequent measurement stereo image Sn (n in this case represents a pair number subsequent to the lastly obtained pair number) on the basis of the counts M1 to Mn. For example, if the condition expressed by an evaluation formula f<Threshold Mt is satisfied, the imaging necessity determination unit 26 determines that acquisition is necessary, but if not, determines that acquisition is unnecessary. The evaluation formula f is a function representing the similarity between the latest preview image Sp and n pairs of already obtained measurement stereo images Sn. If the latest preview image Sp is similar to the already acquired measurement stereo images Sn, the imaging necessity determination unit 26 determines that it is unnecessary to further acquire a measurement stereo image Sn at the same perspective as that of the latest preview image Sp. In contrast, if the latest preview image Sp is not similar to the already acquired measurement stereo images Sn, the imaging necessity determination unit 26 determines that it is necessary to further acquire a measurement stereo image Sn with the same (or approximately the same) perspective as that of the latest preview image Sp. In the present embodiment, the evaluation formula f representing similarity is expressed by a function using the counts M1 to Mn as parameters.

For example, the evaluation formula f as above may be represented as follows. That is, the evaluation formula f may be defined as a total value of the counts M1 to Mn. For the threshold Mt, a fixed value set in advance may be used, or a variable value may be used in conformity with the number n of measurement stereo images Sn, or the like.

$$\text{Evaluation Formula } f\,(M1,\ M2,\ ...,\ Mn) = \Sigma Mi\,(i = 1,\ 2,\ ...,\ n)$$

If it is determined that a subsequent measurement stereo image Sn is required to be acquired with the perspective of (or approximately the same perspective of) having captured the preview image Sp lastly, the imaging necessity determination unit 26 outputs a signal indicating accordingly (determination result) to the output instruction signal output unit 27. In contrast, if it is determined that the acquisition is unnecessary, the imaging necessity determination unit 26 outputs a signal indicating accordingly (determination result) to the preview image acquisition unit 23.

When a signal indicating the necessity of acquiring a subsequent measurement stereo image Sn is inputted from the imaging necessity determination unit 26, the output instruction signal output unit 27 outputs an output instruction signal to the imaging unit 11 and the like. When a signal indicating no need of acquiring a subsequent measurement stereo image Sn is inputted from the imaging necessity determination unit 26 to the preview image acquisition unit 23, the preview image acquisition unit 23 carries out a process of acquiring a subsequent preview image Sp (e.g. carries out a process of keeping a standby-state until a subsequent preview stereo image Sp is outputted from the imaging unit 11).

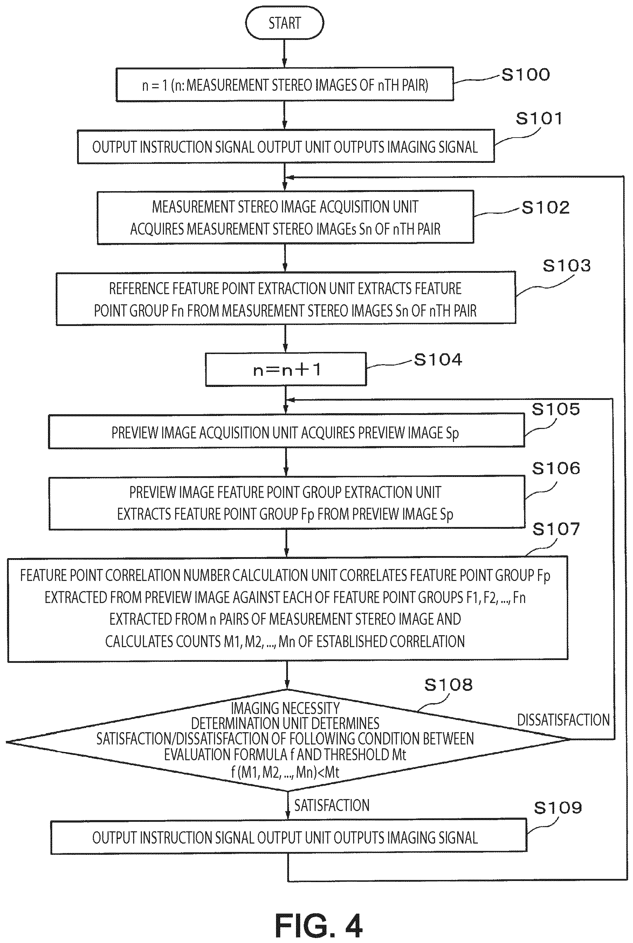

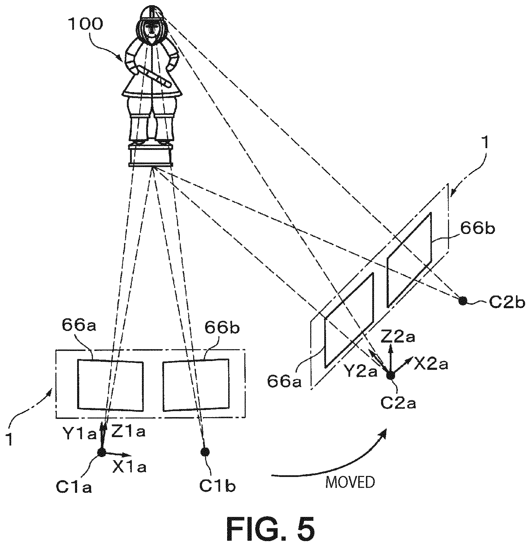

Referring now to the flow chart of Fig. 4 and the illustrative diagrams of Figs. 5 to 8, hereinafter is described an operation example of the three-dimensional shape measurement device 1 illustrated in Fig. 1. Fig. 4 is a flow chart illustrating a process flow in the output instruction generation unit 12 illustrated in Fig. 3. Fig. 5 is a diagram schematically illustrating an operation of imaging an imaging object 100, while the three-dimensional shape measurement device 1 described referring to Figs. 1 to 3 is moved around the object in a direction of the arrow. In this case, Fig. 5 illustrates a positional relationship in respect of the two imaging unit 51a and imaging unit 51b included in the three-dimensional shape measurement device 1, that is, a positional relationship between an imaging plane (or an image plane) 66a, which is formed by the imaging device 65a of the imaging unit 51a, and an imaging plane 66b, which is formed by the imaging device 65b of the imaging unit 51b. A straight line drawn perpendicularly from a perspective (i.e., a focus or an optical center) C1a of the imaging plane 66a toward the imaging plane 66a is an optical axis which is indicated by the arrow Z1a of Fig. 5. The lateral direction of the imaging plane 66a is indicated by the arrow X1a, and the vertical direction by the arrow Y1a. Meanwhile, the perspective of the imaging plane 66b is indicated as a perspective C1b. The imaging planes 66a and 66b are spaced apart by a predetermined distance, and are arranged such that the optical axis directions on the respective imaging planes 66a and 66b are different from each other by a predetermined angle.

In Fig. 5, the perspective of the imaging plane 66a after movement of the three-dimensional shape measurement device 1 in the direction of the arrow is indicated as a perspective C2a. The perspective of the imaging plane 66a after movement is indicated as a perspective C2b. Further, an optical axis as a straight line drawn vertically from the perspective C2a toward the imaging plane 66a after movement is indicated by the arrow Z2a. The lateral direction on the imaging plane 66a after movement is indicated by the arrow X2a, and the vertical direction, by the arrow Y2a.

Fig. 6 is a diagram schematically illustrating a preview image Spa1 when the imaging object 100 is imaged on the imaging plane 66a from the perspective C1a. However, the preview image Spa1 illustrated in Fig. 6 shows a plurality of feature points 201 extracted from the image, in the form of symbols, each being a combination of a rectangle and a mark X.

Fig. 7 is a diagram schematically illustrating a measurement stereo image S1a when the imaging object 100 is imaged on the imaging plane 66a from the perspective C1a. However, the measurement stereo image S1a illustrated in Fig. 7 shows a plurality of feature points 202 extracted from the image, in the form of symbols, each being a combination of a rectangle and a mark X. The size of the symbol representing each feature point 201 in Fig. 6 is made different from that of the symbol representing each feature point 202 in Fig. 7 to schematically represent the difference in resolution between the preview image Sp and the measurement stereo image Sn.

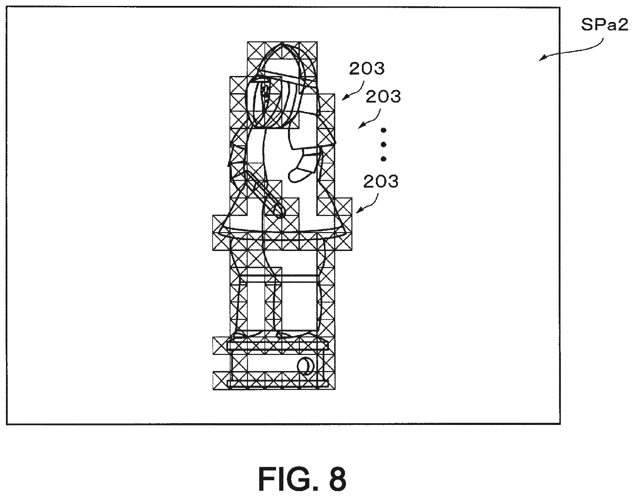

Fig. 8 is a diagram schematically illustrating a preview image Spa2 when the imaging object 100 is imaged on the imaging plane 66a from the perspective C2a after movement. However, the preview image Spa2 illustrated in Fig. 8 shows a plurality of feature points 203 extracted from the image, in the form of symbols, each being a combination of a rectangle and a mark X.

Referring to Fig. 4, an operation example of the three-dimensional shape measurement device 1 is described. For example, when a user performs a predetermined instruction operation, the output instruction generation unit 12 initializes a variable n (n: measurement stereo image number of an $n^{th}$ pair) (step S100) to n=1. Then, the image instruction signal output unit 27 outputs an output instruction signal (step S101). Then, the measurement stereo image acquisition unit 21 acquires measurement stereo images Sn of the $n^{th}$ pair (step S102). Then, the reference feature point extraction unit 22 extracts the feature point group Fn from the measurement stereo images Sn of the $n^{th}$ pair (step S103). At these steps S100 to S103, measurement stereo images S1 of a $1^{st}$ pair as illustrated in Fig. 7 are acquired (however, Fig. 7 shows one image S1a of the paired measurement stereo images S1), and the feature point group F1 including a plurality of feature points 202 is extracted.

Then, a control unit, not shown, in the output instruction generation unit 12 updates the variable n to n=n+1 (step S104). In this case, the variable n is updated to 2. Then, the preview image acquisition unit 23 acquires the preview image Sp (step S105). Then, the preview image feature point group extraction unit 24 extracts the feature point group Fp from the preview image Sp (step S106). At these steps S105 and S106, the preview image Sp as shown in Fig. 6 is captured (Fig. 6 illustrates one image Spa1 of the paired preview images Sp), and the feature point group Fp including a plurality of feature points 201 is extracted.

At step S105, the preview image acquisition unit 23 may acquire two images of the paired preview images Sp from the imaging unit 11, or may acquire only one image. Alternatively, only an image captured by either one of the imaging devices 65a and 65b may be outputted from the imaging unit 11 as the preview image Sp.

Then, the feature point correlation number calculation unit 25 correlates the feature point group Fp extracted from the preview image Sp against each of the feature point groups F1, F2, ..., Fn extracted from the n pairs of measurement stereo images Sn, and calculates the counts M1, M2, ..., Mn of correlation established between the feature point group Fp and each of the feature point groups F1, F2, ..., Fn (step S107). In this case, at step S107, the count M1 of feature points is calculated, which can be correlated, in a predetermined manner, between the plurality of feature points 201 extracted from the preview image Spa1 shown in Fig. 6 and the plurality of feature points 202 extracted from the measurement stereo image S1a shown in Fig. 7.

Then, the imaging necessity determination unit 26 determines satisfaction/dissatisfaction of the following condition between the evaluation formula f and the threshold Mt (step S108). The condition, for example, is f (M1, M2, ..., Mn)<Mt. As mentioned above, the evaluation formula f can be defined as a total value of the counts M1, M2, ..., Mn. Let us assume the case where the count M1 of feature points is not less than the predetermined threshold Mt, between the plurality of feature points 201 extracted from the preview image Spa1 illustrated in Fig. 6 and the plurality of feature points 202 extracted from the measurement stereo image S1a shown in Fig. 7. In this case, the determination result at step S108 turns out to be dissatisfaction, and thus the preview image acquisition unit 23 carries out again the process of acquiring the preview image Sp (step S105). Afterwards, in a similar manner, steps S105 to S108 are repeatedly performed until the determination condition at step S108 is satisfied.

Let us assume, as one example, the case where imaging is started at a position corresponding to the perspective C1a of Fig. 5 and the determination result at step S108 is dissatisfaction for the first time at the perspective C2a. In this case, at the perspective C2a, the preview image Sp shown in Fig. 8 is captured through steps S105 and S106 (Fig. 8 shows one image Spa2 of the paired preview images Sp), while the feature point group Fp including the plurality of feature points 203 are extracted.

Then, at step S107, the count M1 of feature points that can be correlated in a predetermined manner is calculated between the plurality of feature points 203 extracted from the preview image Spa2 shown in Fig. 8 and the plurality of feature points 202 extracted from the measurement stereo image S1a shown in Fig. 7.

Then, the imaging necessity determination unit 26 determines satisfaction/dissatisfaction of the following condition between the evaluation formula f and the threshold Mt (step S108). In this case, according to the above assumption, the count M1 of feature points that can be correlated in a predetermined manner becomes less than the predetermined threshold Mt, between the plurality of feature points 203 extracted from the preview image Spa2 shown in Fig. 8 and the plurality of feature points 202 extracted from the measurement stereo image S1a shown in Fig. 7. Accordingly, in this case, the determination result at step S108 turns out to be satisfaction, and thus the image instruction signal output unit 27 outputs an output instruction signal (step S109) to acquire a subsequent measurement stereo image S2 (step S102).

As described above, in the three-dimensional shape measurement device 1 of the present embodiment, the necessity of acquiring a subsequent measurement stereo image Sn (second two-dimensional image) is determined based on a sequentially captured preview image Sp (first two-dimensional image) and a measurement stereo image Sn (second two-dimensional image) having different setting and used as an object to be processed in generating a three-dimensional model. Accordingly, for example, imaging timing can be appropriately set based on the preview image Sp (first two-dimensional image), and an amount of images to be captured can be appropriately set based on the measurement stereo image Sn (second two-dimensional image). Thus, imaging timing can be easily and appropriately set compared with the case of periodically capturing an image.

The output instruction generation unit 12 of the present embodiment uses, as a basis, the similarity between the preview image Sp (first two-dimensional image) and the measurement stereo image Sn (second two-dimensional image) to determine the necessity of acquiring a subsequent measurement stereo image Sn (second two-dimensional image). This enables omission, for example, of processing that involves a comparatively large amount of calculation, such as, three-dimensional coordinate calculation.

The present invention is not limited to the embodiment described above. For example, the three-dimensional shape measurement device 1 may be appropriately modified so as to have a configuration for reconstructing a three-dimensional model, or for outputting a reconstructed model. In this case, for example, the device 1 may be provided with a display for indicating a three-dimensional model reconstructed based on a captured image. Further, the three-dimensional shape measurement device 1 may be configured using one or more CPUs and a program executed by the CPUs. In this case, for example, the program can be distributed via computer-readable recording media, or communication lines.

Reference Signs List

1     Three-Dimensional Shape Measurement Device
11    Imaging Unit
12    Output Instruction Generation Unit
13    Storage Unit

14    Illumination Unit

**Claims**

**1.** A three-dimensional shape measurement method, comprising:

a) using an imaging unit (11) for outputting:

- sequentially one or several captured first two-dimensional images (S105), and
- a second two-dimensional image (S101) having a resolution higher than that of said first two-dimensional images, according to a predetermined output instruction;

the method further comprising:
b) using an output instruction generating unit (12) for estimating a similarity (S107) between the first two-dimensional image and the second two-dimensional image, and

* if said similarity is equal or above a threshold (DISSATISFACTION-S108), using said imaging unit to acquire a new first two-dimensional image, and repeat step b) with said new first two-dimensional image,
* otherwise, if said similarity is below said threshold (SATISFACTION-S108), storing the second two-dimensional image outputted by the imaging unit and generating said predetermined output instruction so as to capture a new second two-dimensional image (S109), and repeating step b) with said new two-dimensional image.

**2.** A three-dimensional shape measurement device configured for implementing the method of claim 1, comprising:

an imaging unit (11) arranged for outputting said first and second two-dimensional images according to step a), an output instruction generation unit (12) arranged for generating the output instruction on the basis of the similarity estimation between the first two-dimensional image and the second two-dimensional image outputted by the imaging unit according to step b); and
a storage unit (13) arranged for storing the second two-dimensional image outputted by the imaging unit.

**3.** The three-dimensional shape measurement device according to claim 2,
wherein the similarity corresponds to a degree of correlation between a plurality of feature points extracted from the first two-dimensional image and a plurality of feature points extracted from the second two-dimensional image.

**4.** The three-dimensional shape measurement device according to any one of claims 2 and 3,
wherein the first two-dimensional image and the second two-dimensional image have different settings in at least one of a shutter speed, an aperture, and sensitivity of an image sensor in capturing an image.

**5.** The three-dimensional shape measurement device according to any one of claims 2 to 4, wherein:

the device comprises an illumination unit illuminating an imaging object; and
the imaging unit captures the second two-dimensional image, while the illumination unit performs predetermined illumination relative to the imaging object, according to the output instruction.

**6.** A computer program product, comprising instructions for implementing the method of claim 1 when run by the output generating unit (12) of claim 2.

**Patentansprüche**

**1.** Verfahren zum Messen dreidimensionaler Formen, mit den Schritten:

a) Verwenden einer Abbildungseinheit (11) zum
sequentiellen Ausgeben eines oder mehrerer aufgenommener erster zweidimensionaler Bilder (S105); und
Ausgeben eines zweiten zweidimensionalen Bildes (S101) mit einer Auflösung, die höher ist als diejenige der ersten zweidimensionalen Bilder, gemäß einem vorgegebenen Ausgabebefehl,

wobei das Verfahren ferner aufweist:

b) Verwenden einer Ausgabebefehlerzeugungseinheit (12) zum Schätzen einer Ähnlichkeit (S107) zwischen dem ersten zweidimensionalen Bild und dem zweiten zweidimensionalen Bild, und,

wenn die Ähnlichkeit größer oder gleich einem Schwellenwert (DISSATISFACTION-S108) ist, Verwenden der Abbildungseinheit zum Erfassen eines neuen ersten zweidimensionalen Bildes und Wiederholen von Schritt b) mit dem neuen ersten zweidimensionalen Bild,

andernfalls, wenn die Ähnlichkeit unter dem Schwellenwert liegt (SATISFACTION-S108), Speichern des durch die Abbildungseinheit ausgegebenen zweiten zweidimensionalen Bildes und Erzeugen des vorgegebenen Ausgabebefehls, um ein neues zweites zweidimensionales Bild aufzunehmen (S109), und Wiederholen von Schritt b) mit dem neuen zweidimensionalen Bild.

2. Vorrichtung zum Messen dreidimensionaler Formen, die dafür konfiguriert ist, das Verfahren nach Anspruch 1 zu implementieren, mit:

einer Abbildungseinheit (11), die dazu eingerichtet ist, das erste und das zweite zweidimensionale Bild gemäß Schritt a) auszugeben;

einer Ausgabebefehlerzeugungseinheit (12), die dazu eingerichtet ist, den Ausgabebefehl auf der Basis der Ähnlichkeitsschätzung zwischen dem ersten zweidimensionalen Bild und dem zweiten zweidimensionalen Bild, die durch die Abbildungseinheit ausgegeben werden, gemäß Schritt b) zu erzeugen; und

einer Speichereinheit (13), die dazu eingerichtet ist, das durch die Abbildungseinheit ausgegebene zweite zweidimensionale Bild zu speichern.

3. Vorrichtung nach Anspruch 2, wobei

die Ähnlichkeit einem Korrelationsgrad zwischen mehreren vom ersten zweidimensionalen Bild extrahierten Merkmalspunkten und mehreren vom zweiten zweidimensionalen Bild extrahierten Merkmalspunkten entspricht.

4. Vorrichtung nach einem der Ansprüche 2 und 3, wobei

das erste zweidimensionale Bild und das zweite zweidimensionale Bild unterschiedliche Einstellungen in mindestens einem Parameter unter einer Verschlusszeit, einer Blende und einer Empfindlichkeit eines Bildsensors bei der Aufnahme eines Bildes aufweisen.

5. Vorrichtung nach einem der Ansprüche 2 bis 4, wobei

die Vorrichtung eine Beleuchtungseinheit zum Beleuchten eines abzubildenden Objekts aufweist, und

die Abbildungseinheit das zweite zweidimensionale Bild gemäß dem Ausgabebefehl aufnimmt, während die Beleuchtungseinheit eine vorgegebene Beleuchtung in Bezug auf das abzubildende Objekt ausführt.

6. Computerprogrammprodukt mit Anweisungen zum Implementieren des Verfahrens nach Anspruch 1, wenn es durch die Ausgabeerzeugungseinheit (12) von Anspruch 2 ausgeführt wird.

**Revendications**

1. Procédé de mesure de forme tridimensionnelle, comprenant :

a) l'utilisation d'une unité d'imagerie (11) pour délivrer en sortie :

- séquentiellement une ou plusieurs premières images bidimensionnelles capturées (S105), et
- une seconde image bidimensionnelle (S101) ayant une résolution supérieure à celle desdites premières images bidimensionnelles, conformément à une instruction de sortie prédéterminée ;

le procédé comprenant en outre :

b) l'utilisation d'une unité de génération d'instruction de sortie (12) pour estimer une similarité (S107) entre la première image bidimensionnelle et la seconde image bidimensionnelle, et

* si ladite similarité est égale ou supérieure à un seuil (INSATISFACTIONS108), l'utilisation de ladite unité d'imagerie pour acquérir une nouvelle première image bidimensionnelle et la répétition de l'étape b) avec ladite nouvelle première image bidimensionnelle,
* sinon, si ladite similarité est inférieure audit seuil (SATISFACTION- S108), le stockage de la seconde image bidimensionnelle délivrée en sortie par l'unité d'imagerie et la génération de ladite instruction de sortie prédéterminée afin de capturer une nouvelle seconde image bidimensionnelle (S109), et la répétition de l'étape b) avec ladite nouvelle image bidimensionnelle.

2. Dispositif de mesure de forme tridimensionnelle configuré pour mettre en oeuvre le procédé selon la revendication 1, comprenant :

une unité d'imagerie (11) agencée pour délivrer en sortie lesdites première et seconde images bidimensionnelles conformément à l'étape a), une unité de génération d'instruction de sortie (12) agencée pour générer l'instruction de sortie sur la base de l'estimation de similarité entre la première image bidimensionnelle et la seconde image bidimensionnelle délivrées en sortie par l'unité d'imagerie conformément à l'étape b) ; et
une unité de stockage (13) agencée pour stocker la seconde image bidimensionnelle délivrée en sortie par l'unité d'imagerie.

3. Dispositif de mesure de forme tridimensionnelle selon la revendication 2,
dans lequel la similarité correspond à un degré de corrélation entre une pluralité de points caractéristiques extraits de la première image bidimensionnelle et une pluralité de points caractéristiques extraits de la seconde image bidimensionnelle.

4. Dispositif de mesure de forme tridimensionnelle selon l'une quelconque des revendications 2 et 3,
dans lequel la première image bidimensionnelle et la seconde image bidimensionnelle ont des réglages différents dans au moins l'une d'une vitesse d'obturation, d'une ouverture et d'une sensibilité d'un capteur d'image lors de la capture d'une image.

5. Dispositif de mesure de forme tridimensionnelle selon l'une quelconque des revendications 2 à 4, dans lequel :

le dispositif comprend une unité d'éclairage éclairant un objet d'imagerie ; et
l'unité d'imagerie capture la seconde image bidimensionnelle, tandis que l'unité d'éclairage réalise un éclairage prédéterminé par rapport à l'objet d'imagerie, conformément à l'instruction de sortie.

6. Produit programme d'ordinateur, comprenant des instructions pour mettre en oeuvre le procédé selon la revendication 1 lorsqu'il est exécuté par l'unité de génération de sortie (12) de la revendication 2.

## FIG. 1

## FIG. 2

12

OUTPUT INSTRUCTION GENERATION UNIT

MEASUREMENT STEREO IMAGE Sn
(SECOND TWO-DIMENSIONAL IMAGE)

MEASUREMENT STEREO IMAGE ACQUISITION UNIT — 21

MEASUREMENT STEREO IMAGE Sn

REFERENCE FEATURE POINT EXTRACTION UNIT — 22

FEATURE POINT GROUP Fn — 23

PREVIEW IMAGE Sp
(FIRST TWO-DIMENSIONAL IMAGE)

PREVIEW IMAGE ACQUISITION UNIT

PREVIEW IMAGE Sp

PREVIEW IMAGE FEATURE POINT
GROUP EXTRACTION UNIT — 24

FEATURE POINT GROUP Fp

FEATURE POINT CORRELATION
NUMBER CALCULATION UNIT — 25

COUNTS M1 - Mn

IMAGING NECESSITY DETERMINATION UNIT — 26

"UNNECESSARY"

"NECESSARY"

OUTPUT INSTRUCTION

OUTPUT INSTRUCTION SIGNAL OUTPUT UNIT — 27

FIG. 3

15

START

n = 1 (n: MEASUREMENT STEREO IMAGES OF nTH PAIR) — S100

OUTPUT INSTRUCTION SIGNAL OUTPUT UNIT OUTPUTS IMAGING SIGNAL — S101

MEASUREMENT STEREO IMAGE ACQUISITION UNIT
ACQUIRES MEASUREMENT STEREO IMAGEs Sn OF nTH PAIR — S102

REFERENCE FEATURE POINT EXTRACTION UNIT EXTRACTS FEATURE
POINT GROUP Fn FROM MEASUREMENT STEREO IMAGES Sn OF nTH PAIR — S103

n = n + 1 — S104

PREVIEW IMAGE ACQUISITION UNIT ACQUIRES PREVIEW IMAGE Sp — S105

PREVIEW IMAGE FEATURE POINT GROUP EXTRACTION UNIT
EXTRACTS FEATURE POINT GROUP Fp FROM PREVIEW IMAGE Sp — S106

FEATURE POINT CORRELATION NUMBER CALCULATION UNIT CORRELATES FEATURE POINT GROUP Fp
EXTRACTED FROM PREVIEW IMAGE AGAINST EACH OF FEATURE POINT GROUPS F1, F2, ..., Fn
EXTRACTED FROM n PAIRS OF MEASUREMENT STEREO IMAGE AND
CALCULATES COUNTS M1, M2, ..., Mn OF ESTABLISHED CORRELATION — S107

IMAGING NECESSITY
DETERMINATION UNIT DETERMINES
SATISFACTION/DISSATISFACTION OF FOLLOWING CONDITION BETWEEN
EVALUATION FORMULA f AND THRESHOLD Mt
$f(M1, M2, ..., Mn) < Mt$ — S108

DISSATISFACTION

SATISFACTION

OUTPUT INSTRUCTION SIGNAL OUTPUT UNIT OUTPUTS IMAGING SIGNAL — S109

FIG. 4

FIG. 5

**FIG. 6**

**FIG. 7**

18

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013088556 A
- US 2013038701 A1
- US 8259161 B1
- US 6711293 B

**Non-patent literature cited in the description**

- **HIROKI UNTEN ; TOMOHITO MASUDA ; TORU MIHASHI ; MAKOTO ANDO.** Review of VR Model Automatic Generation Technique by Moving Stereo Camera Shot. *Journal of the Virtual Reality Society of Japan,* 2007, vol. 12 (2